# EUROPEAN PATENT SPECIFICATION

(11) **EP 0 730 401 B1**
(45) Date of publication and mention of the grant of the patent: **04.02.1998**
(21) Application number: 95900862.4
(22) Date of filing: 16.11.1994
(51) Int. Cl.: A01K 11/00, G09F 3/02

(54) **ANIMAL LABEL**
MARKE FÜR TIERE
ETIQUETTE POUR ANIMAL

(30) Priority: 25.11.1993 GB 9324275
(43) Date of publication of application: 11.09.1996
(73) Proprietor: Logan, Ernest Fergus, Ballyclare, Co. Antrim BT39 9NA (GB)
(72) Inventor: Logan, Ernest Fergus, Ballyclare, Co. Antrim BT39 9NA (GB)
(74) Representative: Jackson, Peter Arthur
(86) International application number: GB9402521
(87) International publication number: WO9514375

(56) References cited:
- EP-A- 0 190 392
- FR-A- 2 635 437
- GB-A- 2 248 540
- US-A- 3 650 058
- US-A- 4 352 253
- US-A- 4 499 680

## Description

When a sick cow is treated with an antibiotic, her milk should not be used until the antibiotic has cleared from her system, and this may take up to four days following termination of the treatment. However, antibiotic contamination of a farmer's milk supply can occur accidently, either because the farmer does not keep adequate records, or because the treated cow is poorly identified and the person milking the cow is unaware that she has been treated and pours her milk into that from the rest of the herd.

The object of the present invention is to enable the ready identification of a cow whose milk should not be sold.

EP-A-0190392 discloses a marking tag for permanent attachment to game and GB-A-2248540 discloses a method of managing a herd of dairy animals.

A label comprises a strap having at its ends fastening means for securing the ends together with the strap tightly encircling the tail or leg of a cow, the strap having attached to its edge(s) a plurality of tear off tabs and according to a first aspect of the present invention such a label is characterised in that one tab is of different shape to the other tabs.

According to a second aspect of the present invention a method of monitoring a period during which a cow's milk should not be sold comprises the ends of the strap of a label according to the first aspect of the present invention being fastened together with the strap tightly encircling the tail or leg of a cow, and the tab of different shape to the other tabs being removed upon completion of a treatment and one of the other tabs being removed at each subsequent milking to monitor a withdrawal period.

In use, at the beginning of antibiotic treatment, the label is attached to the cow's tail or lower leg. While it remains attached, it provides an immediate identification that her milk should be poured to waste, or otherwise kept separate from the herd's supply. For this reason the label is preferable brightly coloured, for example a fluorescent colour.

The purpose of the tear off tabs is so that one may be torn off at each milking thereby giving a clear indication of the length of time since the treatment commenced, or finished. The number of tabs will be such that the last tab is removed when the withdrawal period for the antibiotic in the udder will have been completed. The length of the withdrawal period varies in dependence upon the particular antibiotic, but is rarely longer than four days, that is to say eight milkings. In order to avoid an excessive number of tabs which would be necessary if one were to be removed at each milking during the antibiotic treatment, and during the withdrawal period, the label may be used in such a way that a first tab is removed when the antibiotic treatment has been completed, and the remaining tabs removed at each subsequent milking. The first tab may be of different shape to the other tabs and all, or most, e.g. all but the first tab, may be consecutively numbered so as to be removed in turn. When all the tabs have been torn off, the strap may be removed, thereby indicating that its milk may once more be sold.

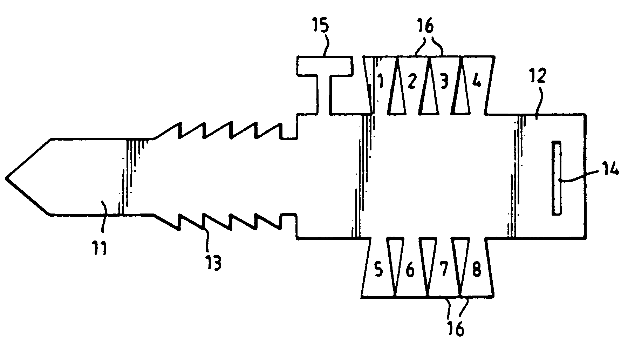

An example of a label constructed in accordance with the present invention is illustrated in plan in the accompanying drawing.

In this case the label is an integral stamping from a thin flexible sheet of plastics material at least one surface of which is brightly coloured. However, the label could be formed by injection moulding. The label consists of an elongate strap having at one end a narrow pointed portion 11 and at the other end a wider portion 12, being at least one inch wide. The narrow portion is provided at its edges with sawtooth projections 13 and the portion 12 is provided with a slot 14. To attach the strap to a cow's tail or leg the strap is wrapped around the tail or leg and the free end of the narrow portion 11 and at least some of teeth 13 are pulled through the slot 14 in the manner of a buckle, the teeth preventing subsequent accidental withdrawal.

Projecting from one side of the portion 12 is a first T-shaped tab 15 and four dove tail-shaped tabs 16. Similar tabs 16 project from the other edge of the portion 12. The tabs 16 are consecutively numbered 1 to 8. All the tabs can be readily torn off with a finger and thumb, one by one, from the portion 12.

The T-shaped tab 15 is intended to be torn off when antibiotic treatment has been concluded, and the tabs 16 one by one at each subsequent milking.

## Claims

1. A label, for identifying a cow whose milk should not be sold, comprising a strap having at its ends (11,12) fastening means (13,14) for securing the ends (11,12) together with the strap tightly encircling the tail or leg of a cow, the strap having attached to its edge(s) a plurality of tear off tabs (15,16) characterised in that one tab (15) is of different shape to the other tabs (16).

2. A label according to claim 1, wherein at least most of the tabs (16) are consecutively numbered.

3. A label according to claim 1 or claim 2, wherein the label is brightly coloured.

4. A label according to any one of the preceding claims, wherein the label is fluorescent.

5. A label according to any one of the preceding claims, which is formed of sheet material.

6. A label according to claim 5, which is formed by stamping.

7. A label according to any one of claims 1 to 4, which is formed by injection moulding.

8. A method of monitoring a period during which a cow's milk should not be sold, wherein the ends (11,12) of the strap of a label according to any one of the preceding claims are fastened together with the strap tightly encircling the tail or leg of a cow, and the tab (15) of different shape to the other tabs (16) is removed upon completion of a treatment and one of the other tabs (16) is removed at each subsequent milking to monitor a withdrawal period.

## Patentansprüche

1. Eine Marke/ein Anhänger zur Identifizierung von Kühen, deren Milch nicht verkaufsfähig ist, umfassend einen Materialstreifen, der an seinen Enden (11, 12) Befestigungsmittel (13, 14) zum Befestigen der Enden (11, 12) aneinander aufweist, wobei der Streifen den Schwanz oder das Bein einer Kuh eng umgibt und an dem Rand (den Rändern) des Streifens eine Mehrzahl Abreißlappen (15, 16) befestigt sind, **dadurch gekennzeichnet,** daß ein Lappen (15) gegenüber den anderen Lappen (16) eine unterschiedliche Form aufweist.

2. Eine Marke nach Anspruch 1, bei der mindestens die meisten der Lappen (16) fortlaufend numeriert sind.

3. Eine Marke nach Anspruch 1 oder Anspruch 2, wobei die Marke hell gefärbt ist.

4. Eine Marke nach einem der vorhergehenden Ansprüche, wobei die Marke fluoreszierend ist.

5. Eine Marke nach einem der vorhergehenden Ansprüche, die aus Blatt-/Flachmaterial hergestellt ist.

6. Eine Marke nach Anspruch 5, die durch Stanzen hergestellt ist.

7. Eine Marke nach einem der Ansprüche 1 bis 4, die durch Spritzgießen hergestellt ist.

8. Ein Verfahren zur Überwachung eines Zeitraumes, während dessen die Milch einer Kuh nicht verkaufsfähig ist, wobei die Enden (11, 12) des Streifens einer Marke gemäß einem der vorhergehenden Ansprüche aneinander befestigt werden, wobei der Streifen den Schwanz oder das Bein einer Kuh eng umgibt, und der Lappen (15) von gegenüber den anderen Lappen (16) unterschiedlicher Form bei Vervollständigung einer Behandlung entfernt wird und einer der anderen Lappen (16) bei jedem folgenden Melken entfernt wird, um einen Abzugszeitraum zu überwachen.

## Revendications

1. Etiquette permettant d'identifier une vache dont le lait ne doit pas être vendu, comprenant une bande ayant à ses extrémités (11, 12) des moyens de fixation (13, 14) permettant d'attacher les extrémités (11, 12) entre elles, la bande enserrant étroitement la queue ou la patte d'une vache, la bande présentant une pluralité de languettes à déchirer (15, 16) fixées sur son ou ses bords, caractérisée en ce qu'une languette (15) a une forme différente de celle des autres languettes (16).

2. Etiquette selon la revendication 1, où au moins la majorité des languettes (16) portent des numéros consécutifs.

3. Etiquette selon la revendication 1 ou la revendication 2, où l'étiquette est de couleur vive.

4. Etiquette selon l'une quelconque des revendications précédentes, où l'étiquette est fluorescente.

5. Etiquette selon l'une quelconque des revendications précédentes, laquelle est formée à partir d'une feuille métallique.

6. Etiquette selon la revendication 5, laquelle est formée par découpage.

7. Etiquette selon l'une quelconque des revendications 1 à 4, laquelle est formée par moulage par injection.

8. Procédé de surveillance de la période pendant laquelle le lait d'une vache ne devrait pas être vendu, où les extrémités (11, 12) de la bande d'une étiquette selon l'une quelconque des revendications précédentes sont fixées l'une à l'autre, la bande enserrant étroitement la patte ou la queue d'une vache, et où la languette (15) de forme différente de celle des autres languettes (16) est retirée après achèvement d'un traitement et une des autres languettes (16) est retirée à chaque traite subséquente, pour surveiller la période d'élimination.
